Europäisches Patentamt

European Patent Office

Office européen des brevets

(19)

(11) Numéro de publication: **0 044 776**
**B1**

(12) **FASCICULE DE BREVET EUROPEEN**

(45) Date de publication du fascicule du brevet: **29.01.86**

(51) Int. Cl.⁴: **H 02 M 3/135**

(21) Numéro de dépôt: **81401128.4**

(22) Date de dépôt: **15.07.81**

(54) **Circuit hacheur à commutation libre.**

(30) Priorité: **17.07.80 FR 8015805**

(43) Date de publication de la demande:
**27.01.82 Bulletin 82/04**

(45) Mention de la délivrance du brevet:
**29.01.86 Bulletin 86/05**

(84) Etats contractants désignés:
**CH DE GB IT LI**

(56) Documents cités:
**CH-A- 483 150**
**CH-A- 561 477**
**FR-A-2 103 128**
**FR-A-2 181 958**
**FR-A-2 223 892**
**US-A-3 445 752**
**US-A-4 135 236**

**IEEE TRANSACTIONS ON MAGNETICS, vol.
MAG-8, no. 3, sept. 1972, New York, US, R.G.
HOFT et al.: "Thyristor series resonant DC-DC
chopper", pages 286-288**

(73) Titulaire: **ALSTHOM**
**38, avenue Kléber**
**F-75784 Paris Cédex 16 (FR)**

(72) Inventeur: **N'Guyen Uyen, Thuy**
**34, rue du Bret Cidex 222 Villefontaine**
**F-38290 La Verpilliere (FR)**

(74) Mandataire: **Laget, Jean-Loup et al**
**Cabinet Pierre Loyer 18, Rue de Mogador**
**F-75009 Paris (FR)**

(56) Documents cités:
**AEI ENGINEERING, vol. 6, no. 2, mars,avril
1966, London, GB, J. BEASLEY et al.:
"Controlling a D.C. traction motor with
thyristors", pages 92-95**

Courier Press, Leamington Spa, England.

EP 0 044 776 B1

## Description

L'invention concerne un circuit hacheur à commutation libre pour l'alimentation d'une charge à partir d'une source de courant continu. Ce type de circuit est notamment applicable aux moteurs électriques de traction.

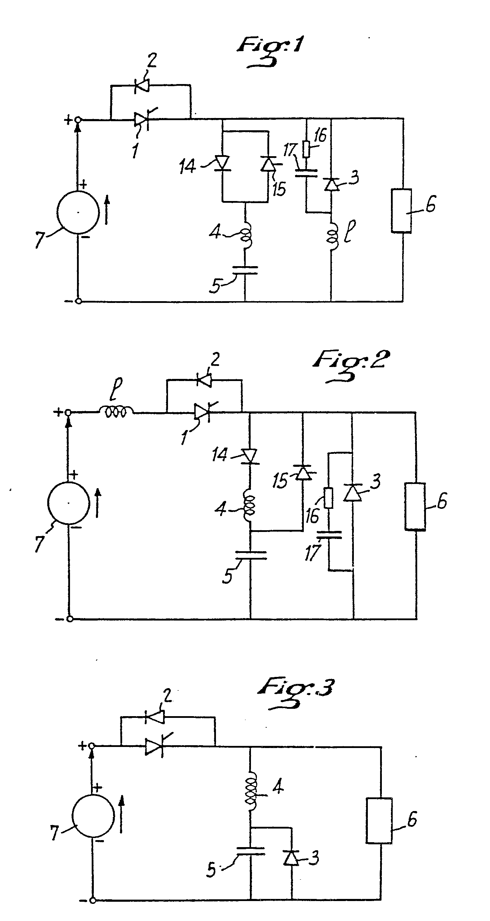

Des exemples de réalisation de circuits hacheurs connus sont illustrés sur les figures 1 et 2. Dans ces exemples, un circuit résonnant série assure la commutation, et une self de limitation des variations du courant en fonction du temps est prévue soit en série avec la diode de roue libre, soit série avec le thyristor principal. Dans les circuits connus, on retrouve toujours la présence de deux selfs aux fonctions bien différentes: l'une dans le circuit résonnant, l'autre en série avec la diode de roue libre ou le thyristor dans un circuit parcouru par le courant de charge.

Par ailleurs, la présence de la self de limitation et cell du réseau de protection à résistance et capacité aux bornes de la diode de roue libre provoquent des surtensions transitoires sur la charge à chaque blocage de la diode de roue libre.

Un autre inconvénient des circuits connus réside dans le fait que le thyristor principal du hacheur voit un courant qui est la superposition du courant de charge et du courant oscillant du circuit de commutation. De ce fait, il est soumis à de dures contraintes en courant et en puissance.

On a déjà tenté d'eliminer ces inconvénience en utilisant un circuit hacheur du type comportant un premier thyristor avec diode de retour anti-parallèle, un circuit LC résonant série de commutation monté en parallèle sur la charge, une diode de roue libre dont l'anode est reliée au pôle négatif de la source de courant, une diode auxiliaire montée en série avec le circuit résonnant de commutation, l'anode de la diode auxiliaire étant reliée à la self de commutation, et la cathode de la diode auxiliaire étant reliée au point commun à la diode de retour et à la charge, un deuxième thyristor dont l'anode est reliée à l'anode du premier thyristor et le cathode au point commun à la self et à la diode auxiliaire (CH—A—561477).

Il est également connu par l'article de R. G. Hoft et al. "Thyristor Series Resonant DC—DC chopper" (IEEE transactions on Magnetics, vol MAG-8, No. 3, sept. 1972, New York, USA) de disposer le circuit résonnant série en parallèle sur la charge et de placer la diode de roue libre en parallèle sur le condensateur de circuit résonnant, comme représenté sur la figure 3. Un tel circuit ne peut fonctionner qu'à fréquence variable quand on fait varier le courant dans la charge.

Dans l'article de J. Beasley et al. "Controlling a d.c. traction motor with thyristors" (AEI Engineering, vol. 6, No. 2, mars/avril 1966), on a prévu d'éviter la charge du condensateur de commutation par des courants de fuite lorsque le thyristor principal conduit pendant un longue période.

L'un des buts de l'invention est de prévoir un circuit hacheur d'encombrement réduit et de poids limité, dans lequel les contraintes électriques soient limitées, dont la tension de sortie soit exempte de surtensions, et offrant la possibilité de fonctionner à fréquence fixe ou variable et permettant notamment de reprendre le contrôle du hacheur après une période de conduction continue.

A cet effet, le circuit hacheur suivant l'invention est caractérisé en ce que la diode de roue libre est montée directement en parallèle sur le condensateur de commutation, la cathode de la diode de roue libre étant reliée au point commun au condensateur et à la self du circuit de commutation, de sorte que le condensateur ne puisse être chargé que dans un sens, et en ce que un circuit de décharge monte en parallèle sur le condensateur comporte un thyristor auxiliaire, une self et une résistance en série, le thyristor auxiliaire permettant de décharger le condensateur avant l'amorçage du deuxième thyristor en cas de reprise de contrôle après conduction continue du hacheur.

Selon d'autres caractéristiques de l'invention:

— pour le fonctionnement à fréquence fixe, c'est le premier thyristor qui assure le passage du courant de charge, et le deuxième thyristor qui joue le rôle de thyristor d'extinction,
— pour le fonctionnement à fréquence variable, le deuxième thyristor assure le passage du courant de charge, le premier thyristor restant bloqué.

D'autres caractéristiques de l'invention ressortiront de la description qui suit faite avec référence au dessin annexé sur lequel on peut voir:

Figure 1, un exemple de réalisation d'un circuit hacheur de type connu à self de limitation en série avec la diode de roue libre;

Figure 2, un autre exemple de réalisation d'un circuit hacheur de type connu à self de limitation en série avec le thyristor principal;

Figure 3, un autre exemple de réalisation d'un circuit de type connu fonctionnant à fréquence variable;

Figure 4, un exemple de réalisation d'un circuit hacheur dérivé du circuit de la figure 3;

Figure 5, un variante de réalisation d'un circuit hacheur selon la figure 4 dans lequel un circuit de décharge est prévu pour le condensateur;

Figure 6, un exemple de réalisation d'un circuit hacheur selon l'invention,

Figure 7, une représentation des courants et des tensions dans le circuit de la figure 3;

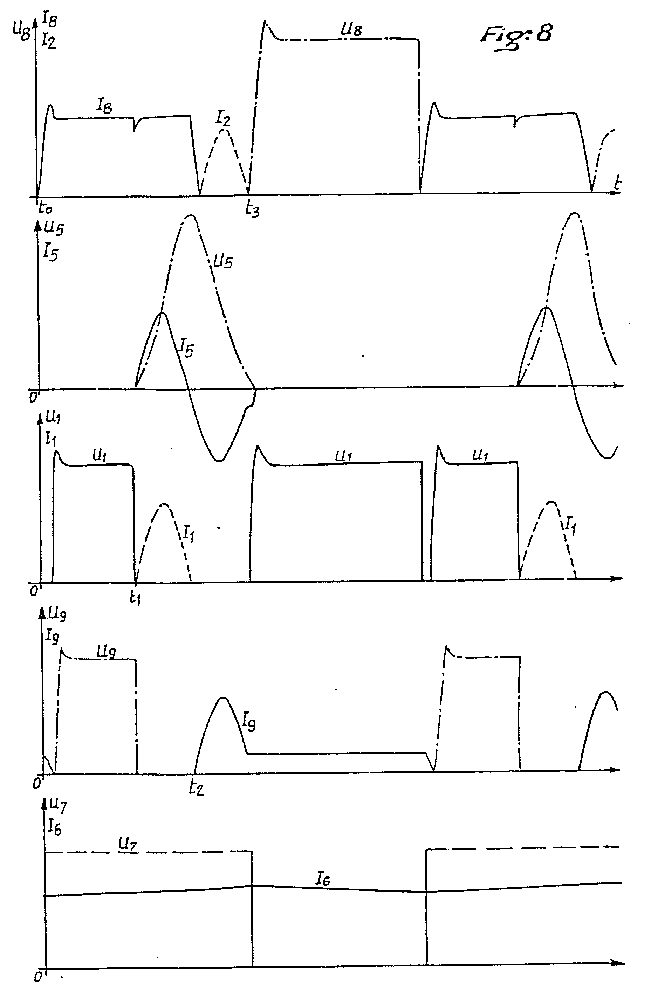

Figure 8, une représentation des courants et des tensions dans le circuit de la figure 4 dans le cas d'un fonctionnement à fréquence fixe.

En se reportant aux dessin (figures 1 et 2), on peut voir que les circuits hacheurs connus sont placés entre une source 7 de courant continu et une charge 6. Ils comportent essentiellement: un thyristor principal 1 avec une diode de retour 2 montée en anti-parallèle; un circuit résonnant série de commutation comportant une self 4 et un condensateur 5; et une diode de roue libre 3. Usuellement, en série avec le circuit résonnant de commutation est prévue une diode 14, et anti-parallèle sur cette diode, un thyristor 15. En outre, en parallèle sur la diode de roue libre est prévu un circuit de protection à résistance 16 et capacité 17.

En outre, est toujours prévue une self 1 de limitation des variations du courant en fonction du temps. Cette self est soit en série avec le diode de roue libre (figure 1), soit en série avec le thyristor principal (figure 2).

On voit que le circuit hacheur suivant la figure 3, de type connu, diffère sensiblement des circuits précédents. En effet, un thyristor principal 1 avec sa diode de retour 2 assure la transfert d'énergie de la source 7 vers la charge 6; en parallèle sur la charge, le circuit résonnant série de commutation est constitué seulement d'une self 4 et d'un condensateur 5; et une diode de roue libre 3 est montée en parallèle sur le condensateur 5 et en série avec la self 4, son anode étant reliée au pôle négatif de la source et sa cathode au point commun à la self 4 et au condensateur 5.

Le fonctionnement du circuit hacheur est le suivant, en supposant le thyristor 1 bloqué à l'instant initial, le courant dans la charge 6 circulant en passant par la diode de roue libre 3 et la self 4. La conduction de la diode 3 maintient une tension nulle aux bornes du condensateur 5. A l'instant $t_0$ le thyristor 1 est amorcé et il est, dès cet instant, traversé par un courant proportionnel à la tension de la source 7 et au temps, et inversement proportionnel à la valeur de l'inductance de la self 4. Lorsque ce courant, à l'instant $t_1$, est égal au courant dans la charge 6, la diode 3 se bloque, et le courant de charge du circuit résonnant s'établit. Le thyristor est alors traversé par la somme des courants dans la charge 6, qui est sensiblement constant, et dans le circuit résonnant 4—5 qui est quasiment sinusoïdal. Du fait de cette superposition, le courant dans le thyristor 1 s'annule au temps $t_2$ et dès cet instant il y a transfert du courant du thyristor 1 à la diode de retour 2 qui est parcourue par la différence entre le courant dans le circuit résonnant et le courant dans la charge.

Lorsque ce courant s'annule au temps $t_3$, la diode 2 se bloque, le courant dans la charge 6 ne pouvant pas subir de discontinuité, la diode 3 se met donc à conduire pour assurer la continuité du courant dans la charge 6. La conduction de la diode 3 ramène donc la tension résiduelle du condensateur 5 à zéro. Le circuit est alors prêt pour un nouveau cycle de fonctionnement.

La tension aux bornes de la charge 6 est égale à la tension de la source 7 pendant tout le temps où soit le thyristor 1 soit la diode 2 conduit, et apparaît donc sous forme d'une suite de créneaux, exempt de toute surtension transis-toire. Le réglage de la tension moyenne sur la charge s'obtient dans ce cas par variation de la fréquence d'amorçage du thyristor 1.

Sur la figure 4, on reconnaît le schéma de base décrit dans la figure 3, auquel sont rajoutés le thyristor 8 monté en anti-parallèle avec la diode 2 et la diode 9 branchée entre le thyristor 1 et la diode 2, l'anode de la diode 9 étant reliée à la cathode du thyristor 1, la cathode de la diode 9 est reliée à l'onde de la diode 2. Ce hacheur présente la possibilité de deux modes de fonctionnement: le fonctionnement à fréquence variable et le fonctionnement à fréquence fixe.

Pour le mode de fonctionnement à fréquence variable le thyristor 8 ne reçoit pas d'impulsion d'amorçage. Seul le thyristor 1 reçoit des ordres d'amorçage à une fréquence variable selon la valeur moyenne de tension voulue sur la charge 6. Le principe de fonctionnement est analogue à celui décrit pour la figure 3: pendant la phase de blocage du hacheur le courant dans la charge 6 s'écoule à travers les diodes 3 et 9 et la self 4, et dans ce cas les diodes 3 et 9 jouent le rôle de diodes de roue libre. A l'amorçage du thyristor 1, commence la phase d'extinction de la diode 3 où le courant décroît avec une vitesse limitée par la self 4. A partir de l'instant $t_1$ où la diode 3 est bloquée débute la charge du circuit résonnant, tandis que la diode 9 assure le passage du courant dans la charge 6. Le courant dans le thyristor 1, qui est la somme du courant de charge et du courant résonnant, s'annule au temps $t_2$, ce qui provoque le blocage du thyristor 1, et il y a transfert du courant du thyristor 1 à la diode 2. La diode 9 assure maintenant la circulation du courant résonnant tandis que dans la diode 2 circule un courant égal à la différence entre le courant résonnant et le courant de charge. A l'instant $t_3$ le courant dans la diode 2 s'annule, et la diode 2 se bloque. La diode 3 s'amorce alors pour assurer la continuité de courant dans la charge 6, et maintient une tension nulle sur le condensateur 5. Le dispositif est alors prêt pour un nouveau cycle de fonctionnement.

Le principe d'un fonctionnement à fréquence fixe est le suivant:

A l'état initial où le hacheur est bloqué, le courant dans la charge 6 s'écoule par les diodes 3 et 9 et la self 4.

A l'instant $t_0$, le thyristor 8 est amorcé, ce qui a pour effet d'éteindre les diodes 9 et 3. La variation de courant dans le thyristor 8 et dans les diodes 3 et 9, est limitée par la self 4. Après le blocage des diodes 3 et 9, le thyristor 8 assure le passage du courant de charge. Pour bloquer le thyristor 9, on amorce le thyristor 1 à l'instant $t_1$, ce qui provo-que la charge du circuit oscillant (self 4 et condensateur 5). L'onde positive du courant oscillant traverse le thyristor 1, et l'onde négative du courant oscillant revient vers la source 7 par la diode 9. A l'instant $t_2$ de mise en conduction de la diode 9, le courant dans le thyristor 8 commence à décroître, ce courant est égal à la différence entre la courant de charge et le courant oscillant croissant. Lorsque le courant dans le thyristor 8 s'annule, la diode 2 se met à conduire. Le courant dans la diode 2 est alors égal à la différence entre le courant oscillant et le courant de charge. La conduction de la diode 2 assure une polarisation en inverse suffisante des thyristors 1 et 8. Enfin la diode 2 se bloque à son tour lorsque son courant s'annule. Dès cet instant t₃ la diode 3 se débloque pour assurer la continuité du courant dans la charge 6., tandis que le condensateur 5 finit par se décharger, suite à la conduction de la diode 3. On est alors ramené à l'état de départ, et le dispositif est prêt pour un nouveau cycle de fonctionnement.

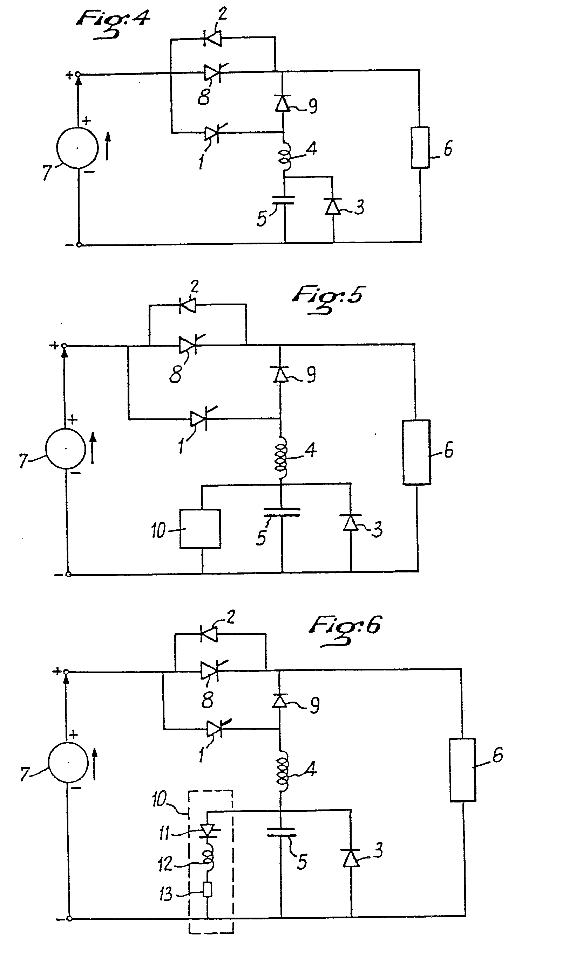

Dans certains cas d'application à la traction électrique où la conduction continue du hacheur est souhaitée, on peut utiliser le schéma de la figure 5.

Le schéma de la figure 5 se déduit du schéma de la figure 4 par la mise en parallèle sur le condensateur 5 d'un dispositif de décharge 10 du condensateur 5. Le principe de fonctionnement est le suivant:

Lorsqu'on veut faire passer le hacheur en conduction continue, le thyristor 8 est amorce tandis que les impulsions de déblocage du thyristor 1 sont arrêtées; la charge 6 est alors reliée à la source 7 via le thyristor 8. Le rôle du dispositif 10 est d'empêcher d'avoir une tension résiduelle positive important sur le condensateur 5 au moment où l'on ré-amorce le thyristor 1 pour la reprise du pouvoir de commutation du hacheur. En effet, sans ce dispositif 10, tenant compte des courants de fuite dans les semi-conducteurs 1 et 9, des réseaux à résistance et capacité de protection de ces semi-conducteurs, le condensateur 5 pourrait être plus ou moins chargé suivant la durée de la conduction continue.

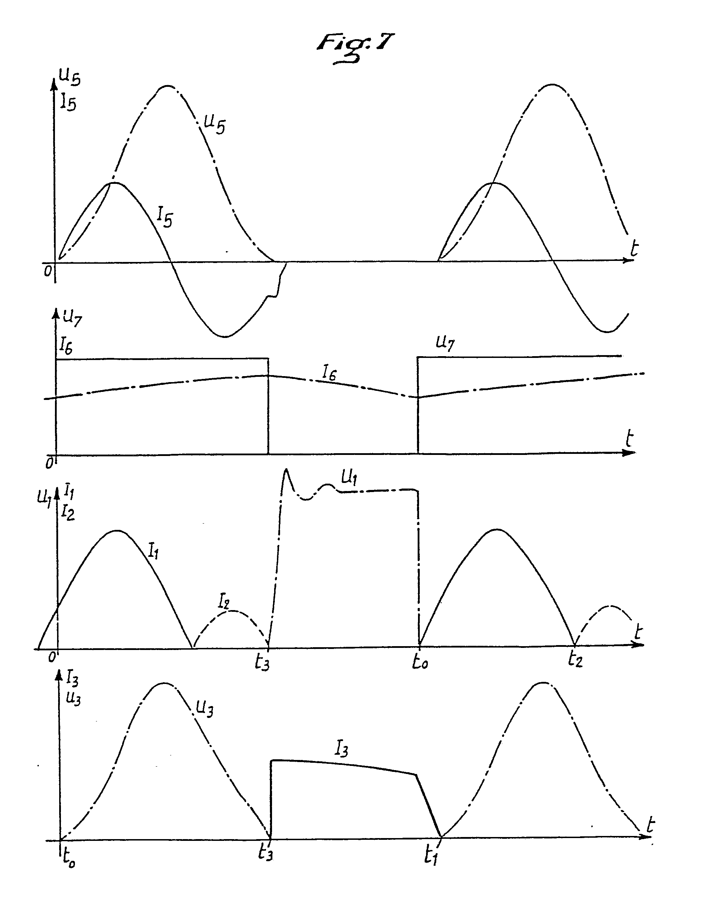

Un mode de réalisation suivant l'invention dispositif 10 est indiqué à la figure 6; il comporte en série un thyristor auxiliaire 11, une self 12 et une résistance 13.

Pour la reprise du contrôle du hacheur, après un passage en conduction continue du hacheur, avant tout amorçage du thyristor 1, on commence par amorcer le thyristor 11, ce qui a pour effet de décharger complètement le condensateur 5. La présence de la self 12 est bénéfique pour raccourcir le temps de décharge du condensateur 5. La résistance 13 sert à limitater le courant de décharge du condensateur 5.

Le circuit hacheur selon l'invention est particulièrement bien adapté aux problèmes de l'alimentation des moteurs de traction par exemple.

## Revendications

1. Circuit hacheur à commutation libre pour l'alimentation d'une charge (6) à partir d'une source (7) de courant continu du type comportant un premier thyristor (8) avec diode (2) de retour anti-parallèle, un circuit LC résonnant série de commutation (4, 5) monté en parallèle sur la charge, une diode (3) de roue libre dont l'anode est reliée au pôle négatif de la source de courant, une diode auxiliaire (9) montée en série avec le circuit résonnant de commutation, l'anode de la diode auxiliaire (9) étant reliée à la self (4) de commutation, et la cathode de la diode auxiliaire (9) étant réliée au point commun à la diode de retour (2) et à la charge (6), un deuxième thyristor (1) dont l'anode est reliée à l'anode du premier thyristor (8) et la cathode au point commun à la self (4) et à la diode auxiliaire (9) caractérisé en ce que la diode de roue libre (3) est montée directement en parallèle sur le condensateur (5) de commutation, la cathode de la diode de roue libre (3) étant reliée au point commun au condensateur (5) et à la self du circuit de commutation (4) de sorte que le condensateur (5) ne puisse être chargé que dans un sens, et en ce que un circuit de décharge (10) monté en parallèle sur le condensateur (5) comporte un thyristor auxiliaire (11), une self (12) et une résistance (13) en série, le thyristor auxiliaire (11) permettant de décharger le condensateur (5) avant l'amorçage du deuxième thyristor (1) en cas de reprise de contrôle après conduction continue de hacheur.

2. Circuit hacheur selon la revendication 1 pour le fonctionnement à fréquence fixe, caractérisé en ce que c'est le premier thyristor (8) qui assure le passage du courant de charge, et le deuxième thyristor (1) qui joue le rôle de thyristor d'extinction.

3. Circuit hacheur selon la revendication 1, pour le fonctionnement à fréquence variable, caractérisé en ce que le deuxième thyristor (1) assure le passage du courant de charge, le premier thyristor (8) restant bloqué.

## Patentansprüche

1. Freigeschalteter Xerhackerkreis zur Speisung einer Ladung (6) aus einer Gleichstromquelle (7) mit einem ersten Thyristor (8) mit einer Antiparallel-Rücklauf-Diode (2), einem Resonanz-Kreis LC Serie Schaltung (4, 5) parallel auf eine Last geschaltet, einer freigeschalteten Diode (3), deren Anode an den negativen Pol der Stromquelle angeschlossen ist, einer Hilfsdiode (9) in Serie mit dem Resonanz-Schaltkreis montiert, wobei die Anode der Hilfsdiode (9) an die Drosselspule (4) der Schaltung und die Kathode der Hilfsdiode (9) an den Nulleiter der Rücklaufdiode (2) und die Last (6) angeschlossen ist, einem zweiten Thyristor (1), dessen Anode an die Anode des ersten Thyristors (8) und die Kathode an den Nulleiter der Drossenspule (4) und an die Hilfsdiode (9) angeschlossen ist, dadurch gekennzeichnet, dass die Diode de Freischaltung (3) direkt parallel auf den Kondensator (5) der Schaltung montiert ist, während die Kathode der Diode der Freischaltung (3) an den Nulleiter am Kondensator (5) und an die Drosselspule des Schaltkreises (4) angeschlossen ist, so dass der Kondensator (5) nur in einer Richtung geladen werden kann und dadurch, dass ein parallel auf den Kondensator (5) geschalteter Entladungskreis (10) einen Hilfsthyristor (11) eine Drosselspule (12) und einen Widerstand (13) aufweist, die in Serie geschaltet sind, so dass der Hilfs-Thyristor (11) eine Entladung des Kondensators (5) vor der Zündung des zweiten Thyristors (1) ermöglicht, wenn die Kontrolle nach der Dauerleitung des Zerhackers übernommen wird.

2. Zerhackerkreis nach Anspruch 1 für einen Betrieb bei fester Frequenz, dadurch gekennzeichnet, dass der erste Thyristor (8) den Durchgang des Ladestroms gewährleistet und der zweite Thyristor (1) die Aufgabe des Löschthyristors übernimmt.

3. Zerhackerkreis nach Anspruch 1 für einen Betrieb bei veränderlicher Frequenz, dadurch gekennzeichnet, dass der zweite Thyristor (1) den Durchgang des Ladestrom gewährleistet, während der erste Thyristor (8) blockiert bleibt.

**Claims**

1. Free switching chopper circuit for supply of a charge (6) from a D.C. source (7) of the type featuring a first thyristor (8) with an anti-parallel return diode (2), a series switching resonant LC circuit (4, 5) mounted in parallel on the load, a free wheel diode (3) whose anode is connected to the negative pole of the current source, an auxiliary diode (9) mounted in series with the resonant switching circuit, the anode of the auxiliary diode (9) being connected to the switching coil (4), and the cathode of the auxiliary diode (9) being connected to a point common to the return diode (2) and to the load (6), a second thyristor (1) whose anode is connected to the anode of the first thyristor (8) and the cathode is connected to the point common to the coil (4) and to the auxiliary diode (9), characterized in that the free wheel diode (3) is mounted directly in parallel on the switching condenser (5), the cathode of the free wheel diode (3) being connected to the point common to the condenser (5) and to the coil (4) of the switching circuit, so that the condenser (5) can only be loaded in one direction, and that the discharge circuit (10), mounted in parallel on the condenser (5), comprises an auxiliary thyristor (11), a reactor coil (12) and a resistor (13) in series, the auxiliary thyristor (11) allowing the condenser (5) to be discharged before the start-up of the second thyristor (1) in case the chopper resumes monitoring after continuous conduction of the chopper.

2. Chopper circuit according to claim 1 for use at fixed frequencies, characterized in that said first thyristor (8) assumes the passage of loading currents, and said second thyristor (1) acts as an extinguishing thyristor.

3. Chopper circuit according to claim 1, for use at variable frequencies, characterized in that said second thyristor (1) assumes the passage of the loading current, said first thyristor (8) remaining blocked.

Fig:1

Fig:2

Fig:3

*Fig:4*

*Fig:5*

*Fig:6*

Fig.7

3

Fig. 8